# EUROPÄISCHE PATENTSCHRIFT

(11) **EP 2 355 661 B1**
(45) Veröffentlichungstag und Bekanntmachung des Hinweises auf die Patenterteilung: **13.02.2013**
(21) Anmeldenummer: 09744403.8
(22) Anmeldetag: 02.11.2009
(51) Int. Cl.: A01N 43/653, A01N 47/24, A01P 3/00, A01N 25/02

(54) **AGROCHEMISCHE FORMULIERUNG MIT DREI LÖSUNGSMITTELN**
AGROCHEMICAL FORMULATION COMPRISING THREE SOLVENTS
FORMULATION AGROCHIMIQUE AVEC TROIS SOLVANTS

(30) Priorität: 07.11.2008 EP 08168615
(43) Veröffentlichungstag der Anmeldung: 17.08.2011
(73) Patentinhaber: BASF SE, 67056 Ludwigshafen (DE)
(72) Erfinder: SOWA, Christian, 67435 Neustadt (DE)
(86) Internationale Anmeldenummer: PCT/EP2009/064420
(87) Internationale Veröffentlichungsnummer: WO 2010/052178

(56) Entgegenhaltungen:
- EP-A- 0 095 242
- EP-A- 1 875 803
- WO-A-2004/023875

## Beschreibung

Gegenstand der vorliegenden Erfindung ist eine Zusammensetzung umfassend Pestizid, Lösungsmittelsystem und Tensid. Des weiteren betrifft die Erfindung die Verwendung eines Lösungsmittelsystem umfassend die Lösungsmittel A) Cyclohexanon oder Acetophenon, B) Benzylalkohol oder 2-Ethylhexanol, und C) Fettsäure zur Herstellung von agrochemischen Formulierungen wie auf seite 2. Die Erfindung betrifft auch ein Verfahren zur Herstellung einer erfindungsgemäßen Zusammensetzung, umfassend das Vermischen von Pestizid und Lösungsmittel A) Cyclohexanon oder Acetophenon, B) Benzylalkohol oder 2-Ethylhexanol, und C) Fettsäure. Weiterer Gegenstand ist die Verwendung einer erfindungsgemäßen Zusammensetzung zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen. Des weiteren ist Gegenstand die Verwendung einer erfindungsgemäßen Zusammensetzung zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, wobei man Saatgüter von Nutzpflanzen mit der Zusammensetzung behandelt. Schließlich betrifft die vorliegende Erfindung auch Saatgut, behandelt mit der erfindungsgemäßen Zusammensetzung.

Kombinationen bevorzugter Merkmale mit anderen bevorzugten Merkmalen werden von der vorliegenden Erfindung umfasst.

Zusammensetzung umfassend Pestizid, Lösungsmittelsystem und Tensid sind allgemein bekannt:
WO 2007/110355 offenbart eine flüssige, nicht-wässrige Formulierung umfassend Pestizid, organisches Lösungsmittel und eine Tensidmischung, wobei als organische Lösungsmittel Ketone, wie Cyclohexanon oder Acetophenon, oder Alkohole, wie Benzylalkohol oder 2-Ethylhexanol, genannt werden.
WO 2002/43488 offenbart eine Öl-in-Wasser Emulsion umfassend Insektizid, Lösungsmittel, Tensidmischung, Verdicker und Wasser, wobei als geeignete Lösungsmittel Ketone, wie Cyclohexanon oder Acetophenon, oder Alkohole, wie Benzylalkohol genannt werden.
WO 2008/017378 offenbart Mikroemulsionskonzentrate enthaltend agrochemische Wirkstoffe, alkoholische und nicht-alkoholische Lösungsmittel und Tenside, wobei als Lösungsmittel einwertige Alkohole mit 5 bis 25 C-Atomen, Carbonsäuren mit 1 bis 18 C-Atomen oder Acetophenon genannt werden.
DE 199 08 559 offenbart Emulsionen umfassend Pestizid und nichtionische Emulgatoren, wobei als unpolares Lösungsmittel Ölsäure genannt wird.
WO 2004/023875 offenbart Mittel umfassend einen Wirkstoff aus der Klasse der Triazole und eine geradkettige oder verzweigte aliphatische Carbonsäure, wobei das Molverhältnis von Triazol zu Carbonsäure größer als 1 ist.

Aufgabe der vorliegenden Erfindung war eine Zusammensetzung umfassend Pestizid, Lösungsmittelsystem und Tensid bereitzustellen, welche eine hohe Beladung mit Pestizid ermöglicht und dabei stabil ist. Stabil bedeutet dabei, dass die Zusammensetzung und insbesondere die mit Wasser verdünnte Zusammensetzung nicht oder wenig zur Kristallisation neigt. Weiterhin war es Aufgabe, dass die vorgenannte Zusammensetzung sowohl für gelöste oder suspendierte Pestizide die geringe Kristallisationsneigung aufweist. Des weiteren war es Aufgabe, eine Zusammensetzung umfassend Pestizid, Lösungsmittelsystem und Tensid in Form eines Emulsionskonzentrats bereitzustellen, das wenig zur Kristallisationsneigung neigt.

Die Aufgabe wurde gelöst durch eine Zusammensetzung umfassend Pestizid, Lösungsmittelsystem und Tensid, wobei dass das Lösungsmittelsystem die Lösungsmittel A) Cyclohexanon oder Acetophenon, B) Benzylalkohol oder 2-Ethylhexanol, und C) Fettsäure umfasst, wobei die zusammensetzung höchstens 35 Gew.% Lösungsmittel A), höchstens 35 Gew.% Lösungsmittel B), und mindestens 30 Gew.% Lösungsmittel C) enthält, jeweils bezogen auf das Lösungsmittelsystem, und wobei mindestens ein pestizid eaven schmelzpunkt von mindestens 5°C HAT.

Die Zusammensetzung umfasst mindestens 40 Gew.%, bevorzugt mindestens 50 Gew.%, besonders bevorzugt mindestens 60 Gew.% Lösungsmittelsystem, bezogen auf die Zusammensetzung. Bevorzugt umfasst die Zusammensetzung 40 bis 95 Gew.%, bevorzugt mindestens 50 bis 90 Gew.%, besonders bevorzugt mindestens 60 bis 90 Gew.% Lösungsmittelsystem, bezogen auf die Zusammensetzung.

Das Lösungsmittelsystem umfasst höchstens 35 Ges.%, bevorzugt höchstens 25 Gew.%, besonders bevorzugt 3 bis 35 Gew.%, und insbesondere 7 bis 25 Gew.%, Lösungsmittel A), bezogen auf das Lösungsmittelsystem. In einer weiteren Ausführungsform umfasst das Lösungsmittelsystem höchstens 35 Gew.%, bevorzugt höchstens 25 Gew.%, besonders bevorzugt 3 bis 35 Gew.%, und insbesondere 7 bis 25 Gew.%, Lösungsmittel B), bezogen auf die Lösungsmittelsystem. In einer weiteren Ausführungsform umfasst das Lösungsmittelsystem mindestens 30 Gew.%, bevorzugt mindestens 40 Gew.%, besonders bevorzugt 30 bis 94 Gew.%, und insbesondere 40 bis 86 Gew.%, Lösungsmittel C), bezogen auf das Lösungsmittelsystem.

Bevorzugt umfasst das Lösungsmittelsystem 3 bis 35 Gew.% Lösungsmittel A), 3 bis 35 Gew.% Lösungsmittel B), und 30 bis 94 Gew.% Lösungsmittel C); insbesondere 7 bis 25 Gew.% Lösungsmittel A), 7 bis 25 Gew.% Lösungsmittel B), und 40 bis 86 Gew.% Lösungsmittel C). Besonders bevorzugt umfasst das Lösungsmittelsystem 3 bis 35 Gew.% Cyclohexanon, 3 bis 35 Gew.% 2-Ethylhexanol, und 30 bis 94 Gew.% Fettsäure; insbesondere 7 bis 25 Gew.% Lösungsmittel A), 7 bis 25 Gew.% Lösungsmittel B), und 40 bis 86 Gew.% Fettsäure.

Lösungsmittel A) ist Cyclohexanon oder Acetophenon, bevorzugt Cyclohexanon. Acetophenon ist auch bekannt als 1-Phenylethanon.

Lösungsmittel B) ist Benzylalkohol oder 2-Ethylhexanol, bevorzugt 2-Ethylhexanol.

Lösungsmittel C) ist eine Fettsäure. Unter Fettsäuren werden üblicherweise lineare, gesättigte oder einfach oder mehrfach ungesättigte, unsubstituierte C10 bis C34 Carbonsäuren verstanden. In einer Ausführungsform werden unter Fettsäuren lineare, gesättigte oder einfach oder mehrfach ungesättigte, unsubstituierte C10 bis C34 Carbonsäuren verstanden, oder ein Gemisch dieser Carbonsäuren. Die Fettsäure kann in Reinform oder in Form von Gemischen verschiedener Fettsäuren vorliegen. Der Fachmann unterscheidet Fettsäuren und Salze von Fettsäuren. Die Fettsäure ist üblicherweise weitgehend frei von Salzen einer Fettsäure, wie Natriumsalze oder Kaliumsalze. Bevorzugt enthält die Fettsäure höchstens 3 Gew.%, bevorzugt höchstens 1 Gew.% Salz einer Fettsäure. Solche Salze einer Fettsäure können nicht als Lösungsmittel verwendet werden, da sie als Tenside wirken. Bevorzugte Fettsäuren sind solche die im Lösungsmittelsystem in der jeweils eingesetzten Menge, bevorzugt bei 10 Gew.% bezogen auf das Lösungsmittelsystem) gelöst vorliegen. In einer Ausführungsform ist die Fettsäure eine Fettsäure oder Gemisch von Fettsäuren, die oder das bei 20 °C in flüssiger Form vorliegen, wie Ölsäure (Schmp. 13 °C), Linolsäure (Schmp. -5 °C) oder Linolensäure (Schmp. -11 °C). In einer weiteren Ausführungsform ist die Fettsäure eine Mischung von Fettsäuren, die 50 bis 95 Gew.%, bevorzugt 60 bis 85 Gew.% Ölsäure ((Z)-9-Octadecensäure) enthält. Solche Mischungen sind kommerziell in technischen Mengenerhältlich, beispielsweise als Edenor® TI 05 oder Edenor® PK1805 von Cognis.

In einer Ausführungsform ist die Zusammensetzung wasserfrei. Sie umfasst üblicherweise höchstens 5 Gew.%, bevorzugt höchstens 2 Gew.%, besonders bevorzugt höchstens 0,5 Gew.% und speziell höchstens 0,1 Gew.% Wasser. Die Zusammensetzung umfasst in dieser Ausführungsform mindestens 40 Gew.%, bevorzugt mindestens 50 Gew.%, besonders bevorzugt mindestens 60 Gew.% Lösungsmittelsystem, bezogen auf die Zusammensetzung. Bevorzugt umfasst die Zusammensetzung 40 bis 95 Gew.%, bevorzugt mindestens 50 bis 90 Gew.%, besonders bevorzugt mindestens 60 bis 90 Gew.% Lösungsmittelsystem, bezogen auf die Zusammensetzung.

In einer weiteren Ausführungsform umfasst die Zusammensetzung eine wässrige Phase. Dabei umfasst die Zusammensetzung mindestens 5 Gew.%, bevorzugt mindestens 10 Gew.%, besonders bevorzugt mindestens 20 Gew.% Wasser, bezogen auf die Zusammensetzung. Die Zusammensetzung umfasst in dieser Ausführungsform mindestens 20 Gew.%, bevorzugt mindestens 30 Gew.%, besonders bevorzugt mindestens 40 Gew.% Lösungsmittelsystem, bezogen auf die Zusammensetzung.

Der Begriff Pestizid bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide und Herbizide, insbesondere Fungizide. Auch Mischungen von Pestiziden aus zwei oder mehr der vorgenannten Klassen können verwendet werden. Der Fachmann ist vertraut mit solchen Pestiziden, die beispielsweise in Pesticide Manual, 14th Ed. (2006), The British Crop Protection Council, London, gefunden werden können. Geeignete Insektizide sind Insektizide der Klasse der Carbamate, Organophophate, Organochlor-Insektizide, Phenylpyrazole, Pyrethroide, Neonicotinoide, Spinosine, Avermectine, Milbemycine, Juvenil Hormon Analoga, Alkylhalide, Organozinn-Verbindungen, Nereistoxin-Analoga, Benzoylharnstoffe, Diacylhydrazine, METI Akarizide, sowie Insektizide wie Chloropicrin, Pymetrozin, Flonicamid, Clofentezin, Hexythiazox, Etoxazol, Diafenthiuron, Propargit, Tetradifon, Chlorfenapyr, DNOC, Buprofezin, Cyromazin, Amitraz, Hydramethylnon, Acequinocyl, Fluacrypyrim, Rotenon, oder deren Derivate. Geeignete Fungizide sind Fungizide der Klassen Dinitroaniline, Allylamine, Anilinopyrimidine, Antibiotica, aromatische Kohlenwasserstoffe, Benzenesulfonamide, Benzimidazole, Benzisothiazole, Benzophenone, Benzothiadiazole, Benzotriazine, Benzylcarbamate, Carbamates, Carboxamide, Carbonsäureamdide, Chloronitrile, Cyanoacetamideoxime, Cyanoimidazole, Cyclopropanecarboxamide, Dicarboximide, Dihydrodioxazine, Dinitrophenylcrotonate, Dithiocarbamate, Dithiolane, Ethylphosphonate, Ethylaminothiazolcarboxamide, Guanidines, Hydroxy-(2-amino-)pyrimidine, Hydroxyanilides, Imidazole, Imidazolinone, A-norganika, Isobenzofuranone, Methoxyacrylate, Methoxycarbamates, Morpholines, N-Phenylcarbamate, Oxazolidinedione, Oximinoacetate, Oximinoacetamide, Peptidylpyrimidinnucleoside, Phenylacetamide, Phenylamide, Phenylpyrrole, Phenylharnstoffe, Phosphonate, Phosphorothiolate, Phthalamsäuren, Phthalimide, Piperazine, Piperidine, Propionamide, Pyridazinone, Pyridine, Pyridinylmethylbenzamide, Pyrimidinamine, Pyrimidine, Pyrimidinonehydrazone, Pyrroloquinolinone, Quinazolinone, Chinoline, Chinone, Sulfamide, Sulfamoyltriazole, Thiazolecarboxamide, Thiocarbamate, Thiocarbamate, Thiophanate, Thiophenecarboxamide, Toluamide, Triphenylzinn Verbindungen, Triazine, Triazole. Geeignete Herbizide sind Herbizide der Klassen der Acetamide, Amide, Aryloxyphenoxypropionate, Benzamide, Benzofuran, Benzoesäuren, Benzothiadiazinone, Bipyridylium, Carbamate, Chloroacetamide, Chlorcarbonsäuren, Cyclohexanedione, Dinitroaniline, Dinitrophenol, Diphenylether, Glycine, Imidazolinone, Isoxazole, Isoxazolidinone, Nitrile, N-phenylphthalimide, Oxadiazole, Oxazolidinedione, Oxyacetamide, Phenoxycarbonsäuren, Phenylcarbamate, Phenylpyrazole, Phenylpyrazoline, Phenylpyridazine, Phosphinsäuren, Phosphoroamidate, Phosphorodithioate, Phthalamate, Pyrazole, Pyridazinone, Pyridine, Pyridincarbonsäuren, Pyridinecarboxamide, Pyrimidindione, Pyrimidinyl(thio)benzoate, Chinolincarbonsäuren, Semicarbazone, Sulfonylaminocarbonyltriazolinone, Sulfonylharnstoffe, Tetrazolinone, Thiadiazole, Thiocarbamate, Triazine, Triazinone, Triazole, Triazolinone, Triazolinone, Triazolocarboxamide, Triazolopyrimidine, Triketone, Uracile, Hamstoffe.

### Geeignete Fungizide sind beispielsweise:

A) Strobilurine:
   Azoxystrobin, Dimoxystrobin, Enestroburin, Fluoxastrobin, Kresoxim-methyl, Metominostrobin, Orysastrobin, Picoxystrobin, Pyraclostrobin, Pyribencarb, Trifloxystrobin, 2-(2-(6-(3-Chlor-2-methyl-phenoxy)-5-fluor-pyrimidin-4-yloxy)-phenyl)-2-methoxy-imino-N-methyl-acetamid, 2-(ortho-((2,5-Dimethylphenyl-oxymethylen)phenyl)-3-methoxy-acrylsäuremethylester, 3-Methoxy-2-(2-(N-(4-methoxy-phenyl)-cyclopropanecarboximidoylsulfanylmethyl)-phenyl)-acrylsäuresäuremethylester, 2-(2-(3-(2,6-dichlorphenyl)-1-methyl-allylideneaminooxymethyl)-phenyl)-2-methoxy-imino-N-methyl-acetamide;
B) Carbonsäureamide:
   - Carbonsäureanilide: Benalaxyl, Benalaxyl-M, Benodanil, Bixafen, Boscalid, Carboxin, Fenfuram, Fenhexamid, Flutolanil, Furametpyr, Isopyrazam, Isotianil, Kiralaxyl, Mepronil, Metalaxyl, Metalaxyl-M (Mefenoxam), Ofurace, Oxadixyl, Oxycarboxin, Penflufen (N-(2-(1,3-Dimethyl-butyl)-phenyl)-1,3-dimethyl-5-fluor-1 H-pyrazol-4-carboxamid), Penthiopyrad, Sedaxane, Tecloftalam, Thifluzamide, Tiadinil, 2-Amino-4-methyl-thiazol-5-carboxanilid, 2-Chlor-N-(1,1,3-trimethyl-indan-4-yl)nicotinamid, N-(3',4',5'-Trifluorbiphenyl-2-yl)-3-difluormethyl-1-methyl-1 H-pyrazol-4-carboxamid, N-(4'-Trifluormethylthiobiphenyl-2-yl)-3-difluormethyl-1-methyl-1H-pyrazol-4-carbox-amid, N-(2-(1,3,3-Trimethyl-butyl)-phenyl)-1,3-dimethyl-5-fluor-1H-pyrazol-4-carbox-amid;
   - Carbonsäuremorpholide: Dimethomorph, Flumorph, Pyrimorph;
   - Benzoesäureamide: Flumetover, Fluopicolide, Fluopyram, Zoxamid, N-(3-Ethyl-3,5,5-trimethylcyclohexyl)-3-formylamino-2-hydroxy-benzamid;
   - Sonstige Carbonsäureamide: Carpropamid, Diclocymet, Mandipropamid, Oxytetracyclin, Silthiofam, N-(6-methoxy-pyridin-3-yl)cyclopropancarbonsäureamid;
C) Azole:
   - Triazole: Azaconazol, Bitertanol, Bromuconazol, Cyproconazol, Difenoconazol, Diniconazol, Diniconazol-M, Epoxiconazol, Fenbuconazol, Fluquinconazol, Flusilazol, Flutriafol, Hexaconazol, Imibenconazol, Ipconazol, Metconazol, Myclobutanil, Oxpoconazol, Paclobutrazol, Penconazol, Propiconazol, Prothioconazol, Simeconazol, Tebuconazol, Tetraconazol, Triadimefon, Triadimenol, Triticonazol, Uniconazol, 1-(4-Chlor-phenyl)-2-([1,2,4]triazol-1-yl)-cycloheptanol;
   - Imidazole: Cyazofamid, Imazalil, Imazalilsulfat, Pefurazoat, Prochloraz, Triflumizol;
   - Benzimidazole: Benomyl, Carbendazim, Fuberidazole, Thiabendazol;
   - Sonstige: Ethaboxam, Etridiazol, Hymexazol, 2-(4-Chlor-phenyl)-N-[4-(3,4-dimethoxy-phenyl)-isoxazol-5-yl]-2-prop-2-inyloxy-acetamid;
D) Stickstoffhaltige Heterocyclylverbindungen
   - Pyridine: Fluazinam, Pyrifenox, 3-[5-(4-Chlor-phenyl)-2,3-dimethyl-isoxazolidin-3-yl]-pyridin, 3-[5-(4-Methyl-phenyl)-2,3-dimethyl-isoxazolidin-3-yl]-pyridin, 2,3,5,6-Tetrachlor-4-methansulfonylpyridin, 3,4,5-Trichlor-pyridin-2,6-dicarbonitril, N-(1-(5-Brom-3-chlor-pyridin-2-yl)-ethyl)-2,4-dichlornicotinamid, N-((5-Brom-3-chlor-pyridin-2-yl)-methyl)-2,4-dichlornicotinamid;
   - Pyrimidine: Bupirimat, Cyprodinil, Diflumetorim, Fenarimol, Ferimzone, Mepanipyrim, Nitrapyrin, Nuarimol, Pyrimethanil;
   - Piperazine: Triforine;
   - Pyrrole: Fludioxonil, Fenpiclonil;
   - Morpholine: Aldimorph, Dodemorph, Dodemorphacetat, Fenpropimorph, Tridemorph;
   - Piperidine: Fenpropidin;
   - Dicarboximide: Fluorimid, Iprodione, Procymidone, Vinclozolin;
   - nichtaromatische 5-Ring-Heterocyclen: Famoxadon, Fenamidon, Flutianil, Octhilinon, Probenazol, 5-Amino-2-isopropyl-3-oxo-4-ortho-tolyl-2,3-dihydropyrazol-1-thiocarbonsäureS-allylester;
   - sonstige: Acibenzolar-S-methyl, Amisulbrom, Anilazin, Blasticidin-S, Captafol, Captan, Chinomethionat, Dazomet, Debacarb, Diclomezine, Difenzoquat, Difenzoquatmethylsulfat, Fenoxanil, Folpet, Oxolinsäure, Piperalin, Proquinazid, Pyroquilon, Quinoxyfen, Triazoxid, Tricyclazol, 2-Butoxy-6-jod-3-propyl-chromen-4-on, 5-Chlor-1-(4,6-dimethoxy-pyrimidin-2-yl)-2-methyl-1H-benzoimidazol, 5-Chlor-7-(4-methylpiperidin-1-yl)-6-(2,4,6-trifluor-phenyl)-[1,2,4]triazolo[1,5-a]pyrimidin, 5-Ethyl-6-octyl-[1,2,4]triazolo[1,5-a]pyrimidin-7-ylamin;
E) Carbamate und Dithiocarbamate
   - Thio- und Dithiocarbamate: Ferbam, Mancozeb, Maneb, Metam, Methasulphocarb, Metiram, Propineb, Thiram, Zineb, Ziram;
   - Carbamate: Diethofencarb, Benthiavalicarb, Iprovalicarb, Propamocarb, Propamocarb-hydrochlorid, Valiphenal, N-(1-(1-(4-Cyanophenyl)ethansulfonyl)-but-2-yl)carbaminsäure-(4-fluorphenyl)ester;
F) Sonstige Fungizide
   - Guanidine: Dodine, Dodine freie Base, Guazatin, Guazatinacetat, Iminoctadin, Iminoctadin-triacetat, Iminoctadin-tris(albesilat);
   - Antibiotika: Kasugamycin, Kasugamycinhydrochlorid-Hydrat, Polyoxine, Streptomycin, Validamycin A;
   - Nitrophenylderivate: Binapacryl, Dicloran, Dinobuton, Dinocap, Nitrothal-isopropyl, Tecnazen;
   - Organometallverbindungen: Fentin-Salze wie beispielsweise Fentin-acetat, Fentinchlorid, Fentin-hydroxid;
   - Schwefelhaltige Heterocyclylverbindungen: Dithianon, Isoprothiolane;
   - Organophosphorverbindungen: Edifenphos, Fosetyl, Fosetyl-Aluminium, Iprobenfos, Phosphorige Säure und ihre Salze, Pyrazophos, Tolclofos-methyl;
   - Organochlorverbindungen: Chlorthalonil, Dichlofluanid, Dichlorphen, Flusulfamide, Hexachlorbenzol, Pencycuron, Pentachlorphenol und dessen Salze, Phthalid, Quintozen, Thiophanat-Methyl, Tolylfluanid, N-(4-Chlor-2-nitro-phenyl)-N-ethyl-4-methyl-benzolsulfonamid;
   - Anorganische Wirkstoffe: Phosphorige Säure und ihre Salze, Bordeaux Brühe, Kupfersalze wie beispielsweise Kupferacetat, Kupferhydroxid, Kupferoxychlorid, basisches Kupfersulfat, Schwefel;
   - Sonstige: Biphenyl, Bronopol, Cyflufenamid, Cymoxanil, Diphenylamin, Metrafenon, Mildiomycin, Oxin-Kupfer, Prohexadion-Calcium, Spiroxamin, Tolylfluanid, N-(Cyclopropylmethoxyimino-(6-difluormethoxy-2,3-difluor-phenyl)-methyl)-2-phenylacetamid, N'-(4-(4-Chlor-3-trifluormethyl-phenoxy)-2,5-dimethyl-phenyl)-N-ethyl-N-methylformamidin, N'-(4-(4-Fluor-3-trifluormethyl-phenoxy)-2,5-dimethyl-phenyl)-N-ethyl-N-methylformamidin, N'-(2-Methyl-5-trifluormethyl-4-(3-trimethylsilanyl-propoxy)-phenyl)-N-ethyl-N-methylformamidin, N'-(5-Difluormethyl-2-methyl-4-(3-trimethylsilanylpropoxy)-phenyl)-N-ethyl-N-methylformamidin, 2-{1-[2-(5-Methyl-3-trifluormethylpyrazo)-1-yl)-acetyl]-piperidin-4-yl}-thiazol-4-carboxylsäure-methyl-(1,2,3,4-tetra-hydronaphthalen-1-yl)-amid, 2-{1-[2-(5-Methyl-3-trifluormethyl-pyrazol-1-yl)-acetyl]-piperidin-4-yl}-thiazol-4-carboxylsäure-methyl-(R)-1,2,3,4-tetrahydronaphthalen-1-yl-amid, Essigsäure-6-tert.-butyl-8-fluor-2,3-dimethyl-quinolin-4-yl-ester, Methoxy-essigsäure-6-tert.-butyl-8-fluor-2,3-dimethyl-quinolin-4-yl-ester, N-Methyl-2-{1-[2-(5-methyl-3-trifluormethyl-1H-pyrazo)-1-yl)-acetyl]-piperidin-4-yl}-N-[(1R)-1,2,3,4-tetrahydro-naphthalen-1-yl]-4-thiazolcarboxamid.

### Geeignete Wachstumsregler sind beispielsweise:

Abscisinsäure, Amidochlor, Ancymidol , 6-Benzylaminopurin, Brassinolid, Butralin, Chlormequat (Chlormequatchlorid), Cholinchlorid, Cyclanilid, Daminozid, Dikegulac, Dimethipin, 2,6-Dimethylpuridin, Ethephon, Flumetralin, Flurprimidol , Fluthiacet, Forchlorfenuron, Gibberellinsäure, Inabenfid, Indol-3-essigsäure, Maleinsäurehydrazid, Mefluidid, Mepiquat (Mepiquatchlorid), Metconazol, Naphthalenessigsäure, N-6-Benzyladenin, Paclobutrazol, Prohexadion (Prohexadion-Calcium), Prohydrojasmon, Thidiazuron, Triapenthenol, Tributylphosphorotrithioat, 2,3,5-tri-Jodbenzoesäure, Trinexapac-ethyl und Uniconazol.

### Geeignete Herbizide sind beispielsweise:

- Acetamide: Acetochlor, Alachlor, Butachlor, Dimethachlor, Dimethenamid, Flufenacet, Mefenacet, Metolachlor, Metazachlor, Napropamid, Naproanilid, Pethoxamid, Pretilachlor, Propachlor, Thenylchlor;
- Aminosäureanaloga: Bilanafos, Glyphosat, Glufosinat, Sulfosat;
- Aryloxyphenoxypropionate: Clodinafop, Cyhalofop-butyl, Fenoxaprop, Fluazifop, Haloxyfop, Metamifop, Propaquizafop, Quizalofop, Quizalofop-P-tefuryl;
- Bipyridyle: Diquat, Paraquat;
- Carbamate und Thiocarbamate: Asulam, Butylate, Carbetamide, Desmedipham, Dimepiperat, Eptam (EPTC), Esprocarb, Molinate, Orbencarb, Phenmedipham, Prosulfocarb, Pyributicarb, Thiobencarb, Triallate;
- Cyclohexanedione: Butroxydim, Clethodim, Cycloxydim, Profoxydim, Sethoxydim, Tepraloxydim, Tralkoxydim;
- Dinitroaniline: Benfluralin, Ethalfluralin, Oryzalin, Pendimethalin, Prodiamine, Trifluralin;
- Diphenylether: Acifluorfen, Aclonifen, Bifenox, Diclofop, Ethoxyfen, Fomesafen, Lactofen, Oxyfluorfen;
- Hydroxybenzonitrile: Bromoxynil, Dichlobenil, loxynil;
- Imidazolinone: Imazamethabenz, Imazamox, Imazapic, Imazapyr, Imazaquin, Imazethapyr;
- Phenoxyessigsäuren: Clomeprop, 2,4-Dichlorphenoxyessigsäure (2,4-D), 2,4-DB, Dichlorprop, MCPA, MCPA-thioethyl, MCPB, Mecoprop;
- Pyrazine: Chloridazon, Flufenpyr-ethyl, Fluthiacet, Norflurazon, Pyridat;
- Pyridine: Aminopyralid, Clopyralid, Diflufenican, Dithiopyr, Fluridone, Fluroxypyr, Picloram, Picolinafen, Thiazopyr;
- Sulfonylharnstoffe: Amidosulfuron, Azimsulfuron, Bensulfuron, Chlorimuron-Ethyl, Chlorsulfuron, Cinosulfuron, Cyclosulfamuron, Ethoxysulfuron, Flazasulfuron, Flucetosulfuron, Flupyrsulfuron, Foramsulfuron, Halosulfuron, Imazosulfuron, lodosulfuron, Mesosulfuron, Metsulfuron-methyl, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, 1-((2-Chlor-6-propyl-imidazo[1,2-b]pyridazin-3-yl)sulfonyl)-3-(4,6-dimethoxy-pyrimidin-2-yl)harnstoff;
- Triazine: Ametryn, Atrazin, Cyanazin, Dimethametryn, Ethiozin, Hexazinon, Metamitron, Metribuzin, Prometryn, Simazin, Terbuthylazin, Terbutryn, Triaziflam;
- Harnstoffe: Chlorotoluron, Daimuron, Diuron, Fluometuron, Isoproturon, Linuron, Methabenzthiazuron,Tebuthiuron;
- andere Hemmstoffe der Acetolactatsynthase: Bispyribac-Natrium, Cloransulam-Methyl, Diclosulam, Florasulam, Flucarbazone, Flumetsulam, Metosulam, Orthosulfamuron, Penoxsulam, Propoxycarbazone, Pyribambenz-Propyl, Pyribenzoxim, Pyriftalid, Pyriminobac-methyl, Pyrimisulfan, Pyrithiobac, Pyroxasulfon, Pyroxsulam;
- Sonstige: Amicarbazon, Aminotriazol, Anilofos, Beflubutamid, Benazolin, Bencarbazon, Benfluresat, Benzofenap, Bentazon, Benzobicyclon, Bromacil, Bromobutid, Butafenacil, Butamifos, Cafenstrole, Carfentrazone, Cinidon-Ethlyl, Chlorthal, Cinmethylin, Clomazone, Cumyluron, Cyprosulfamid, Dicamba, Difenzoquat, Diflufenzopyr, Drechslera monoceras, Endothal, Ethofumesat, Etobenzanid, Fentrazamide, Flumiclorac-Pentyl, Flumioxazin, Flupoxam, Fluorochloridon, Flurtamon, Indanofan, Isoxaben, Isoxaflutol, Lenacil, Propanil, Propyzamid, Quinclorac, Quinmerac, Mesotrion, Methylarsensäure, Naptalam, Oxadiargyl, Oxadiazon, Oxaziclomefon, Pentoxazon, Pinoxaden, Pyraclonil, Pyraflufen-Ethyl, Pyrasulfotol, Pyrazoxyfen, Pyrazolynat, Quinoclamin, Saflufenacil, Sulcotrion, Sulfentrazon, Terbacil, Tefuryltrion, Tembotrion, Thiencarbazon, Topramezon, 4-Hydroxy-3-[2-(2-methoxy-ethoxymethyl)-6-trifluormethyl-pyridin-3-carbonyl]-bicyclo[3.2.1 ]oct-3-en-2-on, (3-[2-Chlor-4-fluor-5-(3-methyl-2,6-dioxo-4-trifluormethyl-3,6-dihydro-2H-pyrimidin-1-yl)-phenoxy]-pyridin-2-yloxy)-essigsäureethylester, 6-Amino-5-chlor-2-cyclopropyl-pyrimidin-4-carboxylsäuremethylester, 6-Chlor-3-(2-cyclopropyl-6-methyl-phenoxy)-pyridazin-4-ol, 4-Amino-3-chlor-6-(4-chlor-phenyl)-5-fluor-pyridin-2-carboxylsäure, 4-Amino-3-chlor-6-(4-chlor-2-fluor-3-methoxy-phenyl)-pyridin-2-carboxylsäuremethyl-ester und 4-Amino-3-chlor-6-(4-chloro-3-dimethylamino-2-fluor-phenyl)-pyridin-2-carboxylsäuremethylester.

### Geeignete Insektizide sind beispielsweise:

- Organo(thio)phosphate: Acephat, Azamethiphos, Azinphos-methyl, Chlorpyrifos, Chlorpyrifos-Methyl, Chlorfenvinphos, Diazinon, Dichlorvos, Dicrotophos, Dimethoat, Disulfoton, Ethion, Fenitrothion, Fenthion, Isoxathion, Malathion, Methamidophos, Methidathion, Methyl-Parathion, Mevinphos, Monocrotophos, Oxydemeton-Methyl, Paraoxon, Parathion, Phenthoate, Phosalone, Phosmet, Phosphamidon, Phorate, Phoxim, Pirimiphos-Methyl, Profenofos, Prothiofos, Sulprophos, Tetrachlorvinphos, Terbufos, Triazophos, Trichlorfon;
- Carbamate: Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Pirimicarb, Propoxur, Thiodicarb, Triazamate;
- Pyrethroide: Allethrin, Bifenthrin, Cyfluthrin, Cyhalothrin, Cyphenothrin, Cypermethrin, alpha-Cypermethrin, beta-Cypermethrin, zeta-Cypermethrin, Deltamethrin, Esfenvalerat, Etofenprox, Fenpropathrin, Fenvalerate, Imiprothrin, Lambda-Cyhalothrin, Permethrin, Prallethrin, Pyrethrin I und II, Resmethrin, Silafluofen, tau-Fluvalinat, Tefluthrin, Tetramethrin, Tralomethrin, Transfluthrin, Profluthrin, Dimefluthrin,
- Hemmstoffe des Insektenwachstums: a) Chitinsynthese-Hemmstoffe: Benzoylharnstoffe: Chlorfluazuron, Cyramazin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazol, Clofentazin; b) Ecdyson-Antagonisten: Halofenozid, Methoxyfenozid, Tebufenozid, Azadirachtin; c) Juvenoide: Pyriproxyfen, Methoprene, Fenoxycarb; d) Lipidbiosynthese-Hemmstoffe: Spirodiclofen, Spiromesifen, Spirotetramat;
- Nikotinreceptor-Agonisten/Antagonisten: Clothianidin, Dinotefuran, Imidacloprid, Thiamethoxam, Nitenpyram, Acetamiprid, Thiacloprid, 1-(2-chloro-thiazol-5-yl-methyl)-2-nitrimino-3,5-dimethyl-[1,3,5]triazinan;
- GABA-Antagonisten: Endosulfan, Ethiprol, Fipronil, Vaniliprol, Pyrafluprol, Pyriprol, 5-Amino-1-(2,6-dichlor-4-methyl-phenyl)-4-sulfinamoyl-1 H-pyrazol-3-thiocarbon-säureamid;
- Macrocyclische Lactone: Abamectin, Emamectin, Milbemectin, Lepimectin, Spinosad, Spinetoram;
- Mitochondriale Elektronentransportketten-Inhibitor (METI) I Akarizide: Fenazaquin, Pyridaben, Tebufenpyrad, Tolfenpyrad, Flufenerim;
- METI II and III Substanzen: Acequinocyl, Fluacyprim, Hydramethylnon;
- Entkoppler: Chlorfenapyr;
- Hemmstoffe der oxidativen Phosphorylierung: Cyhexatin, Diafenthiuron, Fenbutatinoxid, Propargit;
- Hemmstoffe der Häutung der Insekten: Cryomazin;
- Hemmstoffe von ,mixed function oxidases': Piperonylbutoxid;
- Natriumkanalblocker: Indoxacarb, Metaflumizon;
- Sonstige: Benclothiaz, Bifenazate, Cartap, Flonicamid, Pyridalyl, Pymetrozin, Schwefel, Thiocyclam, Flubendiamid, Chlorantraniliprol, Cyazypyr (HGW86); Cyenopyrafen, Flupyrazofos, Cyflumetofen, Amidoflumet, Imicyafos, Bistrifluron und Pyrifluquinazon.

In einer Ausführungsform enthält das Pestizid ein Insektizid, bevorzugt besteht das Pestizid aus mindestens einem Insektizid. In einer weiteren Ausführungsform enthält das Pestizid ein Fungizid, bevorzugt besteht das Pestizid aus mindestens einem Fungizid. Bevorzugte Fungizide sind Pyraclostrobin, Metconazol und Epoxiconazol. In einer weiteren Ausführungsform enthält das Pestizid ein Herbizid, bevorzugt besteht das Pestizid aus mindestens einem Herbizid. In einer weiteren Ausführungsform enthält das Pestizid ein Wachstumsregulator, bevorzugt besteht das Pestizid aus mindestens einem Wachstumsregulator

In einer Ausführungsform ist mindestens ein Pestizid, bevorzugt alle Pestizide, bei 20 °C zu mindestens 10 g/l, bevorzugt zu mindestens 30 g/l und besonders bevorzugt zu mindestens 50 g/l löslich im Lösungsmittelsystem. Als Lösungsmittelsystem wird dabei das jeweils verwendete Lösungsmittelsystem eingesetzt, bevorzugt ein Lösungsmittelsystem bestehend aus Cyclohexanon, 2-Ethylhexanol und Ölsäure, insbesondere bestehend aus 20 Gew.% Cyclohexanon, 20 Gew.% 2-Ethylhexanol und 60 Gew.% Ölsäure.

In einer weiteren Ausführungsform ist mindestens ein Pestizid zu mindestens 90 Gew.%, bevorzugt zu mindestens 99 Gew.%, bezogen auf das Pestizid, im Lösungsmittelsystem in Form fester Teilchen suspendiert. Der Ausdruck "bezogen auf das Pestizid" bezieht sich auf alle Pestizide, welche die Zusammensetzung umfasst. Falls die Zusammensetzung mindestens zwei Pestizide umfasst, ist mindestens ein Pestizid zu mindestens 90 Gew.% im Lösungsmittelsystem gelöst. Bevorzugt ist das Pestizid zu mindestens 95 Gew.%, besonders bevorzugt zu mindestens 98 Gew.% im Lösungsmittelsystem suspendiert.

In einer weiteren Ausführungsform ist mindestens ein Pestizid zu mindestens 90 Gew.%, bevorzugt zu mindestens 99 Gew.%, bezogen auf das Pestizid, im Lösungsmittelsystem gelöst. Der Ausdruck "bezogen auf das Pestizid" bezieht sich auf alle Pestizide, welche die Zusammensetzung umfasst.

In einer weiteren Ausführungsform hat mindestens ein Pestizid einen Schmelzpunkt von mindestens 5 °C, bevorzugt mindestens 25 °C und besonders bevorzugt mindestens 50 °C. Bevorzugt ist dieses Pestizid zusätzlich auch bei 20 °C zu mindestens 10 g/l, bevorzugt zu mindestens 30 g/l und besonders bevorzugt zu mindestens 50 g/l löslich im Lösungsmittelsystem.

Die erfindungsgemäße Zusammensetzung umfasst üblicherweise 0.1 bis 50 Gew.% Pestizid, bevorzugt 1 bis 40 Gew. %, insbesondere 3 bis 30 Gew.%, bezogen auf die Zusammensetzung.

Die erfindungsgemäße Zusammensetzung umfasst ein Tensid, das bedeutet mindestens ein Tensid. Tenside sind Verbindungen, welche die Oberflächenspannung von Wasser verringern. Beispiele für Tenside sind ionische (anionisch oder kationisch) und nicht-ionische Tenside. Bevorzugt umfasst die Zusammensetzung mindestens zwei Tenside, besonders bevorzugt umfasst sie ein nichtionisches Tensid und ein anionisches Tensid. Das Mengenverhältnis von nichtionischem zu anionischem Tensid beträgt meist 1:5 bis 5:1, bevorzugt 1:3 bis 3:1.

Geeignete ionische Tenside sind die Alkali-, Erdalkali-, Ammoniumsalze von aromatischen Sulfonsäuren, z. B. von Lignin-(Borresperse^{®}-Typen, Borregaard, Norwegen), Phenol-, Naphthalin-(Morwet^{®}-Typen, Akzo Nobel, USA) und Dibutylnaphthalinsulfonsäure (Nekal^{®}-Typen, BASF, Deutschland), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polycarboxylate (Sokalan^{®}-Typen, BASF, Deutschland) oder Phosphatester alkoxylierter Alkohole.

Bevorzugte ionische Tenside sind anionische Tenside. Geeignete anionische Tenside sind Alkalimetall- und Ammoniumsalze von Alkylsulfaten (Alkylrest: C8 bis C12), von Schwefelsäurehalbestern ethoxylierter Alkanole (Ethoxilierungsgrad von 4 bis 30, Alkyl-rest: C12 bis C18) und ethoxylierter Alkylphenole (Ethoxilierungsgrad von 3 bis 50, Alkylrest: C4 bis C12), von Alkylsulfonsäuren (Alkyl-rest: C12 bis C18) und von Alkylarylsulfonsäuren (Alkylrest: C9 bis C18), oder Phosphatester eines alkoxylierten Alkohols, speziell Phosphatester eines ethoxyliertem C10-16 Fettalkohols mit Ethoxilierungsgrad von 3 bis 15. Als weitere anionische Temsode sind Verbindungen der allgemeinen Formel (I) geeignet, 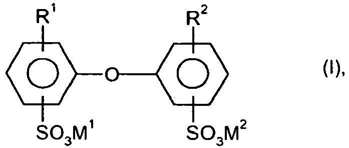 worin R1 und R2 H-Atome oder C4- bis C24-Alkyl bedeuten und nicht gleichzeitig H-Atome sind, und M1 und M2 Alkalimetallionen und/oder Ammoniumionen sein können, erwiesen. In der allgemeinen Formel (I) bedeuten R1 und R2 bevorzugt lineare oder verzweigte Alkylreste mit 6 bis 18 C-Atomen, insbesondere mit 6, 12 und 16 C-Atomen oder Wasserstoff, wobei R1 und R2 nicht beide gleichzeitig H-Atome sind. M1 und M2 sind bevorzugt Natrium, Kalium oder Ammonium, wobei Natrium besonders bevorzugt ist. Besonders vorteilhaft sind Verbindungen (I), in denen M1 und M2 Natrium, R1 ein verzweigter Alkylrest mit 12 C-Atomen und R2 ein H-Atom oder R1 ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Bevorzugte anionische Tenside sind Alkalimetall- und Ammoniumsalze von Alkylarylsulfonsäuren (Alkylrest: C9 bis C18), bevorzugt lineare oder verzweigte Alkylbenzolsulfonsäuren, und Phosphatester eines ethoxyliertem C10-16 Fettalkohols mit Ethoxilierungsgrad von 3 bis 15.

Geeignete nicht-ionische Tenside sind Polyoxyethylenoctylphenolether, alkoxilierte Alkohole wie ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol^{®}-Typen, Clariant), , Polyalkoxylate, Polyvinylamin (Lupamin^{®}-Typen, BASF SE), Polyethylenimin (Lupasol^{®}-Typen, BASF SE), Polyvinylpyrrolidon und deren Copolymere oder Blockpolymere. Geeigneter alkoxylierter Alkohol ist bevorzugt ein mit Ethylenoxid (EO) oder Propylenoxid (PO) alkoxylierter Fettalkohol, insbesondere mit 8 bis 32, speziell mit 9 bis 18 Kohlenstoffatomen im Fettalkoholrest. Der alkoxylierte Fettalkohol hat meist einen Ethoxylierungsgrad von 1 bis 30, bevorzugt 2 bis 10 und speziell 4 bis 8 Ethylenoxidgruppen und/oder ein Propoxilierungsgrad von 1 bis 30, bevorzugt 2 bis 15, und speziell 3 bis 10 Propylenoxidgruppen. Das Blockpolymer ist üblicherweise ein Di- oder Triblockpolymer oder dessen Derivat, wobei der polymere Anteil aufgebaut aus Ethylenoxid und Propylenoxid. Die mittlere Molmasse liegt meist bei mindestens 1000 g/mol, bevorzugt mindestens 2000 g/mol. Speziell geeignet ist Poly(ethylenoxid-block-propylenoxid)-alkylether mit einer Molmasse von mindestens 2000 g/mol und einem C₁₋₁₀-Alkylethereinheit. Bevorzugte nichtionische Tenside sind Alkylphenolpolyglykolether, Tristyrylphenolethoxylate, ethoxyliertes Rizinusöl, bevorzugt mit jeweils 10 bis 40 Ethylenoxideinheiten pro Molekül.

In einer Ausführungsform umfasst die erfindungsgemäße Zusammensetzung 3 bis 47 Gew.% Pestizid, 50 bis 94 Gew.% Lösungsmittelsystem, und 3 bis 47 Gew.% Tensid; bevorzugt 4 bis 33 Gew.% Pestizid, 60 bis 89 Gew.% Lösungsmittelsystem, und 7 bis 36 Gew.% Tensid. In einer Ausführungsform umfasst die erfindungsgemäße Zusammensetzung 3 bis 47 Gew.% Pestizid, 50 bis 94 Gew.% Lösungsmittelsystem umfassend 2-Ethylhexanol, Cyclohexanon und Fettsäure, und 3 bis 47 Gew.% Tensid; bevorzugt 4 bis 33 Gew.% Pestizid, 60 bis 89 Gew.% Lösungsmittelsystem umfassend 2-Ethylhexanol, Cyclohexanon und Fettsäure, und 7 bis 36 Gew.% Tensid.

Die erfindungsgegmäße Zusammensetzung kann weitere, für agrochemische Formulierungen übliche Hilfsstoffe umfassen, wobei sich die Wahl der Hilfsmittel nach der konkreten Anwendungsform bzw. dem Wirkstoff richtet. Beispiele für geeignete Hilfsmittel sind zusätzliche Lösungsmittel, oberflächenaktive Stoffe (wie Solubilisatoren, Schutzkolloide, Netzmittel und Haftmittel), Adjuvantien, organische und anorganische Verdicker, Bakterizide, Frostschutzmittel, Entschäumer, Farbstoffe und Kleber (z. B. für Saatgutbehandlung).

Als zusätzliche Lösungsmittel, die im Lösungsmittelsystem als Hilfsmittel enthalten sein können, kommen organische Lösungsmittel wie Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Glykole, Ketone wie Cyclohexanon, gamma-Butyrolacton, Dimethylfettsäureamide, Fettsäuren und Fettsäureester und stark polare Lösungsmittel, z.B. Amine wie N-Methylpyrrolidon, in Betracht. Grundsätzlich können auch Lösungsmittelgemische verwendet werden. Bevorzugt werden der erfindungsgemäßen Zusammensetzung höchstens 30 Gew.%, bevorzugt höchstens 10 Gew.%, jeweils bezogen auf das Lösungsmittelsystem, und besonders bevorzugt keine zusätzlichen Lösungsmittel zugesetzt.

Als oberflächenaktive Stoffe (Adjuvantien, Netz-, Haft-, Dispergier- oder Emulgiermittel) zusätzlich zu den vorgenannten Tensiden kommen die Alkali-, Erdalkali-, Ammoniumsalze von aromatischen Sulfonsäuren, z. B. von Lignin-(Borresperse^{®}-Typen, Borregaard, Norwegen), Phenol-, Naphthalin-(Morwet^{®}-Typen, Akzo Nobel) und Dibutylnaphthalinsulfonsäure (Nekal^{®}-Typen, BASF), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol^{®}-Typen, Clariant), Polycarboxylate (Sokalan^{®}-Typen, BASF), Polyalkoxylate, Polyvinylamin (Lupamin^{®}-Typen, BASF), Polyethylenimin (Lupasol^{®}-Typen, BASF), Polyvinylpyrrolidon und deren Copolymere in Betracht.

Die erfindungsgemäße Emulsion kann hohe Mengen oberflächenaktiver Stoffe und Tensid umfassen. Sie kann 0,1 bis 40 Gew.%, bevorzugt 1 bis 30 und insbesondere 2 bis 20 Gew.% Gesamtmenge von oberflächenaktiven Stoffe und Tensiden umfassen bezogen auf die Gesamtmenge der Zusammensetzung.

Beispiele für Adjuvantien sind organisch modifizierte Polysiloxane, wie BreakThruS 240^{®}; Alkoholalkoxylate, wie Atplus^{®}245, Atplus^{®}MBA 1303, Plurafac^{®}LF und Lutensol^{®} ON ; EO-PO-Blockpolymerisate, z. B. Pluronic^{®} RPE 2035 und Genapol^{®} B; Alkoholethoxylate, z. B. Lutensol^{®} XP 80; und Natriumdioctylsulfosuccinat, z. B. Leophen^{®} RA.

Beispiele für Verdicker (d. h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan^{®}, CP Kelco), Rhodopol^{®} 23 (Rhodia) oder Veegum^{®} (R.T. Vanderbilt) oder Attaclay^{®} (Engelhard Corp.).

Bakterizide können zur Stabilisierung der Zusammensetzung zugesetzt werden. Beispiele für Bakterizide sind solche basierend auf Diclorophen und Benzylalkoholhemiformal (Proxel^{®} der Fa. ICI oder Acticide^{®} RS der Fa. Thor Chemie und Kathon^{®} MK der Fa. Rohm & Haas) sowie Isothiazolinonderivaten wie Alkylisothiazolinonen und Benzisothiazolinonen (Acticide^{®} MBS der Fa. Thor Chemie).

Beispiele für geeignete Frostschutzmittel sind Ethylenglycol, Propylenglycol, Harnstoff und Glycerin.

Beispiele für Entschäumer sind Silikonemulsionen (wie z. B. Silikon^{®} SRE, Wacker, Deutschland oder Rhodorsil^{®}, Rhodia, Frankreich), langkettige Alkohole, Fettsäuren, Salze von Fettsäuren, fluororganische Verbindungen und deren Gemische.

Beispiele für Farbmittel sind sowohl in Wasser wenig lösliche Pigmente als auch in Wasser lösliche Farbstoffe. Als Beispiele genannt seien die unter den Bezeichnungen Rhodamin B, C. I. Pigment Red 112 und C. I. Solvent Red 1, Pigment blue 15:4, Pigment blue 15:3, Pigment blue 15:2, Pigment blue 15:1, Pigment blue 80, Pigment yellow 1, Pigment yellow 13, Pigment red 48:2, Pigment red 48:1, Pigment red 57:1, Pigment red 53:1, Pigment orange 43, Pigment orange 34, Pigment orange 5, Pigment green 36, Pigment green 7, Pigment white 6, Pigment brown 25, Basic violet 10, Basic violet 49, Acid red 51, Acid red 52, Acid red 14, Acid blue 9, Acid yellow 23, Basic red 10, Basic red 108 bekannten Farbstoffe und Pigmente.

Beispiele für Kleber sind Polyvinylpyrrolidon, Polyvinylacetat, Polyvinylalkohol und Celluloseether (Tylose^{®}, Shin-Etsu, Japan).

Üblicherweise liegen erfindungsgemäßen Zusammensetzungen in Form agrochemischer Formulierungen vor. Geeignete agrochemische Formulierungen sind wasserlösliche Konzentrate (SL, LS), reispergierbare Konzentrate (DC), emulgierbare Konzentrate (EC), Emulsionen (EW, EO, ES, ME), Suspensionen (SC, OD, FS) oder Suspoemulsionen (SE) vor. Bevorzugt liegt die Zusammensetzung in Form eines emulgierbaren Konzentrates (EC) vor.

Die erfindungsgemäße Zusammensetzung wird meist vor der Anwendung verdünnt um den sog. Tankmix herzustellen. Zur Verdünnung kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht. Bevorzugt wird Wasser verwendet. Die verdünnte Zusammensetzung wird üblicherweise durch Versprühen oder Vernebeln angewendet. Zu dem Tankmix können Öle verschiedenen Typs, Netzmittel, Adjuvants, Herbizide, Bakterizide, Fungizide unmittelbar vor der Anwendung (Tankmix) zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Die Pestizidkonzentration im Tankmix kann in größeren Bereichen variiert werden. Im Allgemeinen liegen sie zwischen 0,0001 und 10%, vorzugsweise zwischen 0,01 und 1 %. Die Aufwandmengen liegen bei der Anwendung im Pflanzenschutz je nach Art des gewünschten Effektes zwischen 0,01 und 2,0 kg Wirkstoff pro ha.

Die vorliegende Erfindung betrifft auch die Verwendung einer efindungsgmäßen Zusammensetzung zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt. Weiterhin betrifft die Erfindung die Verwendung einer erfindungsgemäßen Zusammensetzung zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, wobei man Saatgüter von Nutzpflanzen mit der Zusammensetzung behandelt.

Des weiteren betrifft die Erfindung Saatgut, das mit einer erfindungsgemäßen Zusammensetzung behandelt wurde. Der Fachmann versteht unter diesem Vorgang das Beizen von Saatgut. Üblicherweise verbleibt die Beize, welche die erfindungsgemäße Zusammensetzung enthält, auf dem Saatgut. In einer bevorzugten Ausführungsform betrifft die Erfindung Saatgut, das mit einer erfindungsgemäßen Zusammensetzung gebeizt wurde. Besonders bevorzugt betrifft die Erfindung Saatgut enthaltend eine erfindungsgemäße Zusammensetzung. Diese Zusammensetzung kann auf das Saatgut unverdünnt oder, bevorzugt, verdünnt angewendet werden. Hierbei kann die entsprechende Zusammensetzung 2 bis 10-fach verdünnt werden, so dass in den für die Beize zu verwendeten Zusammensetzungen 0,01 to 60% Gew.-%, vorzugsweise 0,1 to 40% Gew.-% Pestizid vorhanden sind. Die Anwendung kann vor der Aussaat erfolgen. Die Behandlung von pflanzlichem Vermehrungsmaterial, insbesondere die Behandlung von Saatgut, sind dem Fachmann bekannt, und erfolgen durch Bestäuben, Beschichten, Pelletieren, Eintauchen oder Tränken des pflanzlichen Vermehrungsmaterial, wobei die Behandlung bevorzugt durch Pelletieren, Beschichten und Bestäuben erfolgt, so dass z. B. eine vorzeitige Keimung des Saatguts verhindert wird. Bei der Behandlung von Staatgut werden im allgemeinen Pestizidmengen von 1 bis 1000 g/100 kg, vorzugsweise 5 bis 100 g/100 kg Vermehrungsmaterial bzw. Saatgut verwendet.

Die vorliegende Erfindung betrifft auch die Verwendung eines Lösungsmittelsystem umfassend die Lösungsmittel A) Cyclohexanon oder Acetophenon, B) Benzylalkohol oder 2-Ethylhexanol, und C) Fettsäure zur Herstellung von agrochemischen Formulierungen wie auf seite 2 Bevorzugte Lösungsmittel und agroschemische Formulierungen sind wie oben beschrieben.

Die vorliegende Erfindung betrifft auch ein Verfahren zur Herstellung der erfindungsgemäßen Zusammensetzung, umfassend das Vermischen von Pestizid und Lösungsmittel A) Cyclohexanon oder Acetophenon, B) Benzylalkohol oder 2-Ethylhexanol, und C) Fettsäure. Bevorzugte Lösungsmittel sind wie oben beschrieben. Das Verfahren umfasst bevorzugt das Vermischen von Pestizid, Tensid und Lösungsmittel A) Cyclohexanon oder Acetophenon, B) Benzylalkohol oder 2-Ethylhexanol, und C) Fettsäure. Bevorzugte Tenside sind wie oben beschrieben. Das Vermischen erfolgt durch übliche Mischverfahren, wie Rühren, Schütteln, oder sonstigen Energieeintrag. Weitere Hilfsmittel, die zur Herstellung von agrochemischen Formulierungen eingesetzt werden, können in üblichen Mengen zugesetzt werden. Beispiele geeigneter Hilfsmittel sind wie oben beschrieben.

Vorteile der vorliegenden Erfindung sind unter anderem, dass sie eine hohe Beladung einer Zusammensetzung mit Pestizid ermöglicht und dabei stabil ist. Die Zusammensetzung und die mit Wasser verdünnte Zusammensetzung neigen nicht oder wenig zur Kristallisation. Die Zusammensetzung ist sowohl für gelöste als auch suspendierte Pestizide geeignet und weist in beiden Fällen eine geringe Kristallisationsneigung auf. Insbesondere Zusammensetzungen in Form von Emulsionskonzentraten sind stabil und neigen nicht zur Kristallisation.

Nachfolgende Beispiele erläutern die Erfindung ohne sie einzuschränken.

### Beispiele

Tensid 1: Tristyrlyphenolethoxylat mit 16 Mol Ethylenoxid pro Mol (kommerziell erhältlich als Soprophor® BSU von Rhodia S.A.)
Tensid 2: Phosphorsäureester von Isotridecylalkohol mit 6 Mol Ethylenoxid ethoxyliert (kommerziell erhältlich als Dispersogen® XP-060 von Clariant)
Ölsäure: flüssiges, technisches Fettsäuregemisch enthaltend eine Kettenverteilung nach ISO 5508 von 67 Gew.% einfach ungesättigte C18-Fettsäure, 13 Gew.% zweifach ungesättigte C18-Fettsäure, 5 Gew.% einfach ungesättigte C16-Fettsäure, 5 Gew.% zweifach ungesättigte Fettsäure; Säurezahl 200 nach ISO660, Iodzahl 95 nach Wijs, Trübungspunkt 5 °C, Wassergehalt 0-0,2 Gew.% nach ISO 760 (kommerziell erhältlich als Edenor® TI 05 von Cognis).
Epoxyconazol: Reinheit: 95,5 Gew.%
Metconazol: Reinheit 98,8 Gew.%
Pyraclostrobin: Reinheit 99,4 Gew.%

### Beispiel 1 - Formulierung von Epoxyconazol

Die Komponenten gemäß der angegebenen Rezepturen A bzw. B wurden eingewogen und durch Rühren so lange vermischt, bis eine klare, homogene Lösung erhalten wurde. Man erhielt jeweils eine klare, einphasige Lösung von Epoxiconazol.

| | | |
|---|---|---|
| A) | 5,2 g | Epoxyconazol |
| | 5,0 g | Tensid 1 |
| | 5,0 g | Tensid 2 |
| | 10,0 g | Benzylalkohol |
| | 10,0 g | Cyclohexanon |
| | ad 100 ml | Ölsäure |
| B) | 10,4 g | Epoxyconazol |
| | 5,0 g | Tensid 1 |
| | 5,0 g | Tensid 2 |
| | 10,0 g | Benzylalkohol |
| | 10,0 g | Cyclohexanon |
| | ad 100 ml | Ölsäure |

Eine Probe von A und B wurde jeweils mit CIPAC Wasser D (enthaltend 342 ppm Ca/Mg Ionen) auf eine 1 Gew.%ige Emulsion verdünnt und sechs Stunden bei 20 °C stehen gelassen. Während dieser Zeit bildeten sich keine Kristalle von Expoxiconazol.

### Beispiel 2 - Formulierung von Pyraclostrobin

Die formulierungen A und B wurden wie in Beispiel 1 beschreiben hergestellt. Anschließend wurde eine Probe auf eine 1 Gew.%ige Emulsion verdünnt und sechs Stunden bei 20 °C stehen gelassen. Während dieser Zeit bildeten sich keine Kristalle von Pyraclostrobin.

| | | |
|---|---|---|
| A) | 25,2 g | Pyraclostrobin |
| | 5,0 g | Tensid 1 |
| | 5,0 g | Tensid 2 |
| | 10,0 g | 2-Ethylhexanol |
| | 10,0 g | Cyclohexanon |
| | ad 100 ml | Ölsäure |
| B) | 25,2 g | Pyraclostrobin |
| | 5,0 g | Tensid 1 |
| | 5,0 g | Tensid 2 |
| | 10,0 g | 2-Ethylhexanol |
| | 20,0 g | Cyclohexanon |
| | ad 100 ml | Ölsäure |

### Beispiel 3 - Formulierung von Metconazol

Eine formulierung wurde wie in Beispiel 1 beschreiben hergestellt. Anschließend wurde eine Probe auf eine 1 Gew.%ige Emulsion verdünnt und sechs Stunden bei 20 °C stehen gelassen. Während dieser Zeit bildeten sich keine Kristalle von Pyraclostrobin.

| | |
|---|---|
| 15,2 g | Metconazol |
| 5,0 g | Tensid 1 |
| 5,0 g | Tensid 2 |
| 20,0 g | 2-Ethylhexanol |
| 10,0 g | Cyclohexanon |
| ad 100 ml | Ölsäure |

## Patentansprüche

1. Zusammensetzung umfassend Pestizid, Lösungsmittelsystem und Tensid, **dadurch gekennzeichnet, dass** das Lösungsmittelsystem die Lösungsmittel
A) Cyclohexanon oder Acetophenon,
B) Benzylalkohol oder 2-Ethylhexanol, und
C) Fettsäure
umfasst,
wobei die Zusammensetzung höchstens 35 Gew.% Lösungsmittel A), höchstens 35 Gew.% Lösungsmittel B), und mindestens 30 Gew.% Lösungsmittel C) enthält, jeweils bezogen auf das Lösungsmittelsystem, und
wobei mindestens ein Pestizid einen Schmelzpunkt von mindestens 5 °C hat.

2. Zusammensetzung nach Anspruch 1, wobei die Fettsäure eine lineare, gesättigte oder einfach oder mehrfach ungesättigte, unsubstituierte C10 bis C34 Carbonsäuren, oder ein Gemisch dieser Carbonsäuren ist.

3. Zusammensetzung nach Anspruch 1 oder 2, wobei die Fettsäure eine Fettsäure oder Gemisch von Fettsäuren ist, die oder das bei 20 °C in flüssiger Form vorliegen.

4. Zusammensetzung nach den Ansprüchen 1 bis 3, **dadurch gekennzeichnet, dass** das Lösungsmittelsystem 3 bis 35 Gew.% Lösungsmittel A), 3 bis 35 Gew.% Lösungsmittel B), und 30 bis 94 Gew.% Lösungsmittel C) umfasst.

5. Zusammensetzung nach den Ansprüchen 1 bis 4, **dadurch gekennzeichnet, dass** Lösungsmittel B) 2-Ethylhexanol ist.

6. Zusammensetzung nach den Ansprüchen 1 bis 5, **dadurch gekennzeichnet, dass** Lösungsmittel A) Cyclohexanon ist.

7. Zusammensetzung nach den Ansprüchen 1 bis 6, **dadurch gekennzeichnet, dass** die Zusammensetzung ein nichtionisches Tensid und ein anionisches Tensid umfasst.

8. Zusammensetzung nach den Ansprüchen 1 bis 7, **dadurch gekennzeichnet, dass** das Pestizid zu mindestens 90 Gew.%, bezogen auf das Pestizid, im Lösungsmittelsystem gelöst ist.

9. Zusammensetzung nach den Ansprüchen 1 bis 7, **dadurch gekennzeichnet, dass** das Pestizid zu mindestens 90 Gew.%, bezogen auf das Pestizid, im Lösungsmittelsystem in Form fester Teilchen suspendiert ist.

10. Zusammensetzung nach den Ansprüchen 1 bis 9, **dadurch gekennzeichnet, dass** das die Zusammensetzung mindestens 20 Gew.% Wasser umfasst, bezogen auf die Masse der Zusammensetzung.

11. Verwendung eines Lösungsmittelsystem umfassend die Lösungsmittel
A) Cyclohexanon oder Acetophenon,
B) Benzylalkohol oder 2-Ethylhexanol, und
C) Fettsäure
zur Herstellung von agrochemischen Formulierungen
wobei die agrochemischen Formulierung höchstens 35 Gew.% Lösungsmittel A), höchstens 35 Gew.% Lösungsmittel B), und mindestens 30 Gew.% Lösungsmittel C) enthält, jeweils bezogen auf das Lösungsmittelsystem, und
wobei mindestens ein Pestizid in der agrochemischen Formulierung enthalten ist, das einen Schmelzpunkt von mindestens 5 °C hat.

12. Verfahren zur Herstellung einer Zusammensetzung gemäß den Ansprüchen 1 bis 10, umfassend das Vermischen von Pestizid und Lösungsmittel
A) Cyclohexanon oder Acetophenon,
B) Benzylalkohol oder 2-Ethylhexanol, und
C) Fettsäure.

13. Verwendung einer Zusammensetzung gemäß einem der Ansprüche 1 bis 10 zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

14. Verwendung einer Zusammensetzung gemäß einem der Ansprüche 1 bis 10 zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, wobei man Saatgüter von Nutzpflanzen mit der Zusammensetzung behandelt.

15. Saatgut, enthaltend die Zusammensetzung gemäß einem der Ansprüche 1 bis 10.

## Claims

1. A composition comprising pesticide, solvent system and surfactant, wherein the solvent system comprises the solvents
A) cyclohexanone or acetophenone,
B) benzyl alcohol or 2-ethylhexanol, and
C) fatty acid,
where the composition comprises at most 35% by weight of solvent A), at most 35% by weight of solvent B), and at least 30% by weight of solvent C), in each case based on the solvent system, and
where at least one pesticide has a melting point of at least 5°C.

2. The composition according to claim 1, where the fatty acid is a linear, saturated or mono- or polyunsaturated, unsubstituted C10 to C34 carboxylic acids, or a mixture of these carboxylic acids.

3. The composition according to claim 1 or 2, where the fatty acid is a fatty acid or mixture of fatty acids which is/are present in liquid form at 20°C.

4. The composition according to claims 1 to 3, wherein the solvent system comprises 3 to 35% by weight of solvent A), 3 to 35% by weight of solvent B), and 30 to 94% by weight of solvent C).

5. The composition according to claims 1 to 4, wherein solvent B) is 2-ethylhexanol.

6. The composition according to claims 1 to 5, wherein solvent A) is cyclohexanone.

7. The composition according to claims 1 to 6, wherein the composition comprises one nonionic surfactant and one anionic surfactant.

8. The composition according to claims 1 to 7, wherein the pesticide is dissolved in the solvent system to at least 90% by weight, based on the pesticide.

9. The composition according to claims 1 to 7, wherein the pesticide is suspended in the solvent system in the form of solid particles to at least 90% by weight, based on the pesticide.

10. The composition according to claims 1 to 9, wherein the composition comprises at least 20% by weight of water, based on the mass of the composition.

11. The use of a solvent system comprising the solvents
A) cyclohexanone or acetophenone,
B) benzyl alcohol or 2-ethylhexanol, and
C) fatty acid
for producing agrochemical formulations
where the agrochemical formulation comprises at most 35% by weight of solvent A), at most 35% by weight of solvent B), and at least 30% by weight of solvent C), in each case based on the solvent system, and
where at least one pesticide is present in the agrochemical formulation which has a melting point of at least 5°C.

12. A method for producing a composition according to claims 1 to 10, comprising the mixing of pesticide and solvents
A) cyclohexanone or acetophenone,
B) benzyl alcohol or 2-ethylhexanol, and
C) fatty acid.

13. The use of a composition according to any one of claims 1 to 10 for controlling phytopathogenic fungi and/or undesired plant growth and/or undesired attack by insects or mites and/or for regulating the growth of plants, where the composition is allowed to act on the particular pests, their habitat or the plants to be protected from the particular pest, the soil and/or on undesired plants and/or the useful plants and/or their habitat.

14. The use of a composition according to any one of claims 1 to 10 for controlling undesired attack by insects or mites on plants and/or for controlling phytopathogenic fungi and/or for controlling undesired plant growth, where seed materials of useful plants are treated with the composition.

15. A seed material comprising the composition according to any one of claims 1 to 10.

## Revendications

1. Composition comprenant un pesticide, un système de solvant et un agent tensioactif, **caractérisée en ce que** le système de solvant comporte les solvants
A) de la cyclohexanone ou de l'acétophénone,
B) de l'alcool benzylique ou du 2-éthylhexanol, et
C) un/des acide(s) gras
la composition contenant au plus 35% en poids de solvant A), au plus 35% en poids de solvant B), et au moins 30% en poids de solvant C), à chaque fois par rapport au système de solvant, et
au moins un pesticide présentant un point de fusion d'au moins 5°C.

2. Composition selon la revendication 1, l'acide gras étant un acides carboxyliques en C10 à C34 linéaire, saturé, monoinsaturé ou polyinsaturé, non substitué, ou un mélange de ces acides carboxyliques.

3. Composition selon la revendication 1 ou 2, l'acide gras étant un acide gras ou un mélange d'acides gras qui se trouve sous forme liquide à 20°C.

4. Composition selon les revendications 1 à 3, **caractérisée en ce que** le système de solvant comprend 3 à 35% en poids de solvant A), 3 à 35% en poids de solvant B) et 30 à 94% en poids de solvant C).

5. Composition selon les revendications 1 à 4, **caractérisée en ce que** le solvant B) est le 2-éthylhexanol.

6. Composition selon les revendications 1 à 5, **caractérisée en ce que** le solvant A) est la cyclohexanone.

7. Composition selon les revendications 1 à 6, **caractérisée en ce que** la composition comprend un agent tensioactif non ionique et un agent tensioactif anionique.

8. Composition selon les revendications 1 à 7, **caractérisée en ce que** le pesticide est dissous à raison d'au moins 90% en poids, par rapport au pesticide, dans le système de solvant.

9. Composition selon les revendications 1 à 7, **caractérisée en ce que** le pesticide est en suspension sous forme de particules solides à raison d'au moins 90% en poids, par rapport au pesticide, dans le système de solvant.

10. Composition selon les revendications 1 à 9, **caractérisée en ce que** la composition comprend au moins 20% en poids d'eau, par rapport à la masse de la composition.

11. Utilisation d'un système de solvant comprenant les solvants
A) de la cyclohexanone ou de l'acétophénone,
B) de l'alcool benzylique ou du 2-éthylhexanol, et
C) un/des acide(s) gras
pour la préparation de formulations agrochimiques la formulation agrochimique contenant au plus 35% en poids de solvant A), au plus 35% en poids de solvant B) et au moins 30% en poids de solvant C), à chaque fois par rapport au système de solvant, et
au moins un pesticide étant contenu dans la formulation agrochimique, qui présente un point de fusion d'au moins 5°C.

12. Procédé pour la préparation d'une composition selon les revendications 1 à 10, comprenant le mélange du pesticide et des solvants
A) de la cyclohexanone ou de l'acétophénone,
B) de l'alcool benzylique ou du 2-éthylhexanol, et
C) un/des acide(s) gras.

13. Utilisation d'une composition selon l'une quelconque des revendications 1 à 10 pour lutter contre des champignons phytopathogènes et/ou une croissance non souhaitée de plantes et/ou une attaque non souhaitée par des insectes ou des acariens et/ou pour la régulation de la croissance de plantes, où on laisse agir la composition sur les différents animaux nuisibles, leur espace de vie ou les plantes, le sol à protéger contre les différents animaux nuisibles et/ou sur les plantes non souhaitées et/ou sur les plantes utiles et/ou leur espace de vie.

14. Utilisation d'une composition selon l'une quelconque des revendications 1 à 10 pour lutter contre une attaque non souhaitée par des insectes ou des acariens sur des plantes et/ou pour lutter contre des champignons phytopathogènes et/ou pour lutter contre une croissance non souhaitée de plantes, les semences de plantes utiles étant traitées par la composition.

15. Semences, contenant la composition selon l'une quelconque des revendications 1 à 10.
